# EUROPEAN PATENT APPLICATION

(11) **EP 2 455 352 A1**
(43) Date of publication of application: **23.05.2012**
(21) Application number: 11190136.9
(22) Date of filing: 22.11.2011
(51) Int. Cl.: C04B 33/14, C04B 35/00, C04B 33/132, C04B 35/626

(54) **Artificial stone production process**

(30) Priority: 23.11.2010 IT TO20100927
(71) Applicant: Holler Porfidi S.r.l., 38121 Trento (IT)
(72) Inventor: Sglavo, Vincenzo Maria, 38050 Roncegno Terme (Trento) (IT); Dalla Torre, Emanuele, 38015 Lavis (Trento) (IT); Holler, Gino, 39055 Laives (Bolzano) (IT)
(74) Representative: Freyria Fava, Cristina

(57) **Abstract**

The present description relates to a process for producing artificial stones starting from fractions of waste resulting from the processing of porphyry stone, such as sands and/or silts.

## Description

### Field of the invention

The present disclosure relates to a process for producing artificial stones, preferably in the form of plates or slabs starting from fractions of waste from the processing of porphyry stone.

### Technological background

Porphyry is an effusive magmatic rock of various colours, most frequently grey, red, or reddish, with a porphyry structure, constituted, that is, by a microcystalline or vitreous mass, immersed in which are large crystals (phenocrystals). The fundamental mineralogical constituents are quartz, orthoclase, albite/anortite, plagioclase, sanidine, biotite; hornblende and pyroxenes are rare. Accessory minerals are, among others, apatite, magnetite, and zircon; phenocrystals are generally constituted by feldspar (orthoclase and plagioclase) and quartz and at times also by biotite.

Trentino porphyry is, specifically, of a quartziferous type, characterized by a crystalline composition of high purity and homogeneity. It has an isotropic texture in which the recognizable minerals are represented exclusively by small crystals of pink potassium feldspar, milk-white plagioclase, vitreous quartz, and black mafic minerals.

From the chemical standpoint, porphyry is constituted by approximately 70% silica (SiO₂), 14% aluminium oxide (Al₂O₃), 8% sodium oxide (Na₂O) and potassium oxide (K₂O), 3% iron oxides (Fe₂O₃), and a very limited content of other impurities.

The use of the term "quartziferous porphyry" is typically European and indicates the effusive counterpart of granites, namely, the product of consolidation on the surface of a lava of granite composition that has expanded in remote geological times (European quartziferous porphyries in general date back to the Carboniferous or Permian). The term was, in fact, coined for the first time in Germany, where the first petrographers applied it to indigenous rocks, located, for example, in the Black Forest, in the Odenwald, as well as in the Massif Central; said term was then extended to other areas of the alpine chain.

In the Alps quartzifer deposits are found in various regions, but the complex that can be considered the largest in Europe is certainly that of the mountains of Trentino Alto Adige, which is referred to as "Atesina porphyry platform". Said enormous complex of volcanic rocks, which extends in the region of Trentino Alto Adige, presents rocks that are extremely varied and differentiated as regards modalities of formation, which are a consequence of an intense volcanic activity that began 260 millions of years ago in the Lower Permian and proceeded for several millions of years in a continuous succession of eruptive stages and stages of stasis.

Among the various modalities of deposition of these rocks, ignimbrites assume particular importance since these are the ones that gave rise to porphyry. These derive from flows of liquid-gas mixtures with thicknesses ranging from five to ten metres and a relatively constant chemism, until it constitutes the so-called ignimbritic unit, which reaches a thickness of hundreds of metres.

Porphyry currently cultivated is limited to one of these ignimbritic units, classified as rhyolitic ignimbrite and characterized by vertical fissuring and very clear percussion fracture, indispensable for working the stone to form regular plates or slabs of some centimetres in thickness.

The term porphyry is nothing other than the commercial name of the mineral that from the petrographic standpoint is referred to as "ignimbritic rhyolite".

The chemical composition, the mineralogical composition, and the markedly porphyric structure determine, in addition to schistosity, the technical characteristics (high ultimate compressive strength, high resistance to the attack of chemical agents, high sliding and rolling friction) that make porphyry one of the most important materials for paving and coating in Europe.

On account of the particular characteristic of the internal structure of porphyry stone, the large blocks of materials extracted from the quarries have cleavage lines along which the material can - following upon impact or in time -crack. During working of the stone, the blocks are hence previously separated into slabs, then split or cut to obtain plates, blocks, and cubes of the dimensions desired and requested by the market.

A considerable fraction of the excavated material (approximately 70%) represents the by-product of the production of plates, blocks, and cubes.

This important fraction is today all conveyed into purposely provided crushing systems in order to obtain aggregates useful in the production of railway ballast, concrete, and asphalt.

However, a still considerable portion of the material cannot be used industrially and is commonly disposed of in dumps, with consequent high costs for the extracting and transforming companies. This portion consists, in particular, of sands of limited grain size (less than 4 mm) and the so-called "silts", namely, waste obtained from the purification of the waters used in the processes of crushing and cutting. The silts alone constitute a waste that may be quantified in approximately one million tonnes a year in Trentino alone.

It should be emphasized that the activity of extraction of porphyry is rendered possible only if the environmental parameter can be disregarded; i.e., the company must, in order to guarantee work and profits from extraction, be ready to take upon itself the responsibility for the environmental damage represented by enormous dumps. This condition has continued to deteriorate in the last few years, both owing to the difficulty of finding dumping areas, and as a result of the emerging ecological conscience of local communities.

There is hence an increasingly impellent need to find possible applications of porphyry-processing scraps in the building industry, in order to reduce the problems of disposal thereof and thus prevent the need for opening new borrow pits in the territory. The aim is, hence, to convert a problem, such as that of disposal of scrap material, into a possible resource, that will be the source of new profits. Reuse of the waste deriving from primary processing of porphyry is hence the missing link for compatibility between development and environment.

From the chemical and mineralogical standpoint, silts and sands have a composition very similar to the reference natural stone and this has pushed the research to identify possibilities of use thereof as base material in the production of products useful in the building sector, for laying floorings having the characteristics and appearance similar to the ones obtained with the corresponding natural rock.

In some prior documents there is described the production of ceramic products obtained by mixing to other raw materials also sands or agglomerates deriving from processing of porphyry stone.

The U.S. patent No. US 5,264.168 A describes a process for producing ceramic plates starting from granulates (powders) obtained from natural silicate stones (feldspar, porphyry, granite, syenite, quartz) and/or from ground ceramics, which are mixed with a water-based binding phase constituted by powders of ceramic materials (such as feldspar and nephelinite mixed with clay, kaolin, bentonite, etc.) corresponding to a percentage ranging between 45% and 65% with respect to the total volume of the final composition. The mixture is then formed by vibrocompaction, dried and sintered at temperatures of between 1000°C and 1300°C. The material obtained possesses interesting mechanical properties (flexural strength higher than 300 kg/cm²). Even though it is not specifically said in the document, the final material has a chemical and mineralogical composition that is totally different from the starting raw materials and hence has different technical and aesthetic characteristics. The final material is constituted above all by a vitreous matrix that englobes limited crystals of quartz and, in some cases, of mullite; this renders the end product an excellent ceramic material but does not replicate the physical, chemical, technical, and aesthetic characteristics of the natural stone, whether this be porphyry, granite, or other stone.

In an altogether similar way, the document "Production of porcelain based on dacite porphyry", Steklo i keramika, vol. 23, No. 4, 1966, by K.A. Stukalina and T.I. Taraeva, describes a process for producing porcelain (i.e., ceramic), using porphyry (dacite porphyry), as a substitute for traditional quartz, in an amount of 57%, feldspar in an amount of 20-23%, in an amount of kaolin 8%, and clay in an amount of 12%. It is expressly stated in the document that the porphyry used, dacite porphyry, can be recommended as raw material for producing hard porcelain instead of quartz and kaolin provided that feldspar (which is useful as fusing agent) is also used. The porphyry in question presents in the form of powder of variable colour (from white to dark grey) but contains very limited amounts of colouring oxides such as iron and titanium. The raw materials are finely ground (to a maximum grain size of less than 300 µm) and possibly mixed with water (approximately 31-33%) and a solution of sodium silicate (waterglass) (approximately 0.2%) for forming by means of slip casting. The "dry" mix is then used to obtain slabs or plates by pressing. The suspension is used for producing cups or other objects of various shapes that are typically obtained by slip casting. The objects fired (at temperatures of 1350-1380°C) are also enamelled, in some cases with a glaze, which also contains powder of porphyry (dacite porphyry) instead of quartz. There is no doubt that also in this case the material obtained following the present process is a porcelain, i.e., a ceramic constituted above all by a vitreous phase with crystals of quartz and mullite immersed therein, altogether different from porphyry stone; the product is translucid and substantially white.

What has just been stated above also applies to the French patent No. FR 734,342 A and the international patent application No. WO 2004/022295 A1, described in which are procedures for obtaining ceramic components (grès) starting from various silicate raw materials, amongst which also porphyry powders. Also in these two cases, as likewise in many other procedures appearing in the technical and scientific literature known to modern ceramurgy where reference is made to the use of binding phases based on silicate raw materials (for example, silica) to produce ceramics, the end product does not present the characteristics of natural stone and not even the chemical/mineralogical composition of the starting raw materials. It is, instead, the result of a vitrification of the silicate phases in the presence of alkalis with the consequent formation of an extensive vitreous matrix containing variable fractions of crystals of quartz and, at times, mullite.

With a decidedly different approach, in a prior document, and specifically in the British patent No. GB-A-18 883 published in 1912, a process is described that envisages the use of porphyry-processing scraps in the production of artificial stones. The process is obtained by mixing said waste with aluminium phosphate and sodium carbonate, pressing the mixture with the addition of a certain amount of water, and heating the piece at a temperature of between approximately 1100°C and 1200°C.

The above process does not, however, enable artificial stones to be obtained with the necessary physical, mechanical, and aesthetic characteristics fundamental for use in the industrial field.

### Summary of the invention

Taking into account the limitations existing in the processes according to the prior art, there is hence felt the need to identify a process that will enable artificial stone to be obtained starting from waste resulting from the porphyry industry, where the resulting artificial stone presents the necessary physical and mechanical characteristics as well as the aesthetic characteristics useful for its application in the building sector.

The above object is achieved thanks to the solution specifically recalled in the ensuing claims. The claims form an integral part of the description of the present application.

According to one embodiment, the present disclosure envisages the possibility of consolidating mixtures constituted by sands, silts, and appropriate consolidation agents useful for sintering and, optionally, for bestowing on the product particular aesthetic characteristics using sintering/consolidation temperatures lower than 1100°C so as to prevent degradation of the fundamental mineral constituents of porphyry, primarily iron oxide and quartz, with consequent destruction of the fundamental microstructure of the material.

One embodiment of the present disclosure concerns a process for obtaining artificial stone starting from porphyry silts and/or sands, comprising:
- forming a mixture basically constituted by silts and/or sands added to which is at least one consolidation additive, optionally in the presence of water,
- producing, starting from said mixture, a shaped body (greenware);
- sintering the shaped body,
so as to obtain said artificial stone, where the porphyry silts or sands have a grain size of less than 4 mm and the consolidation additive is chosen between sodium silicate and cobalt chloride.

The present description provides a process that departs substantially from the processes described in the prior art and in particular from the process described in the British patent No. GB-A-18 883 in so far as the raw materials used and their relative amounts, as well as the final characteristics of the material provide a product having chemico-physical characteristics superior to those that can be achieved with the processes according to the prior art.

In particular, with reference to the process described in the document No. GB-A-18 883 the artificial stone produced with the process forming the subject of the present application presents as being far more compact, stronger from the mechanical standpoint, and with specific aesthetic and chromatic characteristics.

### Detailed description of the invention

In what follows, detailed indications will be provided for enabling implementation of the process forming the subject of the present description. Said description does not have a limiting nature but is provided merely by way of example of the process. Consequently, variations in terms of process conditions or raw materials used may be made, without thereby departing from the sphere of protection conferred by the present application on the basis of its claims.

One embodiment of the present description concerns a process for obtaining artificial stones starting from porphyry silts and/or sands, comprising:
- mixing silts and/or sands with at least one consolidation additive, possibly in the presence of water;
- forming the mixture; and
- sintering the mixture formed,
   so as to obtain said artificial stone, wherein the porphyry silts or sands have a grain size of less than 4 mm and the consolidation additive is chosen between sodium silicate and cobalt chloride.

In the present disclosure, a process is described for producing artificial stones in the form of slabs or plates with various chromatic hues starting from the porphyry-processing scrap, namely, sands with a grain size of less than 4 mm and silts, and waste obtained from the purification of the waters used in the crushing and cutting processes.

Specific mixtures of sands, silts, and appropriate chemical agents are initially formed in slabs or plates of various dimensions and thicknesses and then subjected to heating at a temperature lower than 1100°C so as to promote processes of consolidation by sintering in order to obtain dense products having specific technical and aesthetic characteristics.

The process described herein departs from the processes known in the sector of ceramurgy: the porphyry silts and/or sands are not mixed with other binding materials (such as, for example, feldspar, kaolin, clay, silica, bentonite, etc.). Said binding materials would, in fact, give rise - during the sintering step -to a vitreous matrix, englobed within which there would remain the porphyry silts and/or sands with consequences on the physical, chemical, technical, and aesthetic characteristics of the final material, which could not be defined as artificial stone.

### Raw materials

The raw materials used for producing artificial stones in the form of slabs or plates are represented fundamentally by porphyry silts and sands, added to which are chemical compounds such as sodium silicate and optionally cobalt chloride.

The porphyry silts represent the residue of the steps of sawing, grinding, and polishing of the natural stone. They present as a slimy aggregate containing fractions of water ranging from a few percent to approximately 50%. Once it has been dried and disaggregated into the individual fragments, it presents a grain size of less than 300 µm approximately and a chemical and mineralogical composition altogether similar to that of natural rock (hence with a prevalence of quartz and feldspars).

The sand used in the framework of the present disclosure corresponds to the fraction having a grain size comprised between 0 and 4 mm, of limited industrial use (in concretes or bituminous agglomerates), deriving from the operations of crushing and subsequent sifting/separation of aggregates of larger grain size. The grain size of the sand in question comprises fractions with a wide variability in the 0 to 4-mm range, even though the majority of the material falls within the range from 500 µm to 3 mm. Also the sand has a chemical and mineralogical composition altogether similar to that of natural rock.

Sodium silicate, as solid in aqueous solution, is used as additive for improving the process of consolidation of the powders (dried sand and silt) during the thermal treatment following upon formation through activation of sintering mechanisms in the presence of liquid phase.

Cobalt chloride (CoCl₂ or else CoCl₂ · 6H₂O) is used as additive to modify the chromatic characteristics of the material produced, enabling final hues to be obtained ranging from orange to brown to maroon, grey and black, but also this guarantees activation of sintering mechanisms at relatively limited temperatures.

### Preliminary processing

The preliminary processing of the raw materials mainly regards the treatment of the silts. In order to be appropriately used, they must undergo first of all a drying process (by means of conventional heating - hot air or IR irradiation -or through microwave treatment) in order to remove at least to a large extent the presence of humidity (bringing it down to below 5%).

Next, the silts must be mechanically disaggregated to obtain a powder with grain size of less than 300 µm. Finally, appropriate granulometric classes must be selected and assorted by sifting both the silts and the sand.

### Mixing, forming, and firing

The main object of the present disclosure is the development of a basic microcystalline paste similar both as regards its appearance and as regards its characteristics to the one naturally present in the natural rock.

For this purpose, the starting point is to mix appropriately the powders with grain size of less than 300 µm with water in amounts ranging from 0 to 20 wt%, according to the consistency to be obtained in the case of forming.

To obtain the maximum density possible a granulometric distribution is developed based upon theoretical models proposed by Dinger-Funk [J.S. Reed, Principles of ceramics processing, 2^{nd} Ed., J. Wiley & Sons, 1995] in their studies on packing of particles of various size.

By way of example, appearing in Table 1 is one of the granulometric distributions used.

**Table 1**

| **Maximum size** | **Granulometric fraction (%)** |
|---|---|
| 300 | 0.0 |
| 150 | 27.7 |
| 80 | 19.6 |
| 40 | 17.0 |
| 3 | 35.8 |

In addition to the distributions optimized according to the models such as the one proposed by Dinger-Funk, there can also be used dried and disaggregated silts as such, added with water (0-20 wt%).

Added to the mixes thus obtained are variable amounts of sodium silicate and/or cobalt chloride ranging between 0 and 10 wt% in order to achieve variable final physical, mechanical, and chromatic properties.

No other raw materials such as feldspar, bentonite, silica, clay, or kaolin are added to the mixes.

Mixing of the raw materials may be performed manually or mechanically, but it is necessary to guarantee homogeneity of the aggregate, which in general presents as a sufficiently dry mass.

Once the mixing step is through, the next step is that of forming via pressing. An appropriate amount of raw material is introduced into the mould and subjected to pressing with maximum loads ranging between 10 and 100 MPa for times ranging between a few fractions of a second to some minutes.

The base surface of the mould or of the countermould may present appropriate engravings, undulations, or the like in order to reproduce in the final plate specific morphological or steric characteristics.

The greenware slab or plate taken out of the mould is then subjected to a firing process that guarantees consolidation through which the end product is obtained.

The temperatures and times necessary for an effective sintering are the following:
- sintering temperature: 1000-1200°C;
- stay time in isotherm at the maximum temperature: 30 min-8 h;
- heating ramp: from 0.1°C/min to 10°C/min.

The slabs or plates thus obtained, which have a chemical and mineralogical composition altogether similar to that of the starting raw materials, hence guaranteeing also physico-chemical and aesthetic characteristics similar to those of natural porphyry stone, can then be subjected to processes of cutting, smoothing, polishing, flaming, or the like in a way altogether similar to what occurs for natural porphyry stones.

### Examples of embodiment

### Example 1: brown homogeneous-paste product

This product was obtained using silts as such in the percentage of 92% with the addition of 3% sodium silicate dissolved in 5% water. The mixture was pressed with a load of 40 MPa for five minutes and then fired in a furnace for 4 h at 1100°C.

The artificial stone thus obtained had the physical and mechanical characteristics listed below:
- bulk density = 2.26 g/cm³
- porosity = 11.3%
- water absorption = 8.7%
- biaxial flexural strength [2] = 27.2 MPa
- fundamental crystalline phases present (total > 95%): quartz, albite, orthoclase; vitreous phase = 4-5%.

### Example 2: black homogeneous-paste product

This product was obtained using silts as such in the percentage of 90% with the addition of 5% cobalt chloride hexahydrate and 5% water, pressed under a load of 40 MPa, for 5 min, and then fired in a furnace for 4 h at 1100°C.

The product had the physical and mechanical characteristics listed below:
- bulk density = 2.4 g/cm³
- porosity = 5%
- water absorption = 1%
- flexural strength = 52.4 MPa
- fundamental crystalline phases present (total > 93%): quartz, albite, orthoclase; cobalt oxide = 5%, vitreous phase < 2%.

### Example 3: granular-paste product similar to natural porphyry

This product was obtained using the granulometric distribution appearing in Table 2 in an amount of 92% with the addition of 3% sodium silicate dissolved in 5% water.

The mixture of the silts and sand with the grain size identified was pressed under a load of 40 MPa for 5 minutes and then fired in a furnace for 4 h at 1100°C.

**Table 2**

| **Maximum grain size** | **Granulometric %** |
|---|---|
| 4000 | 0.0 |
| 2500 | 4.2 |
| 1180 | 5.4 |
| 800 | 2.3 |
| 425 | 3.1 |
| silts as such | 80.0 |

Said artificial stone had the physical and mechanical characteristics listed below:
- bulk density = 2.2 g/cm³
- porosity = 14%
- water absorption = 5%
- flexural strength = 24 MPa
- fundamental crystalline phases present (total > 95%): quartz, albite, orthoclase; vitreous phase = 4-5%.

### Comparison with the prior art

The artificial stone obtained with the process forming the subject of the present disclosure is sufficiently similar from the standpoint of granulometric assortment to the one described in the patent No. GB-A-18 883 given the simultaneous presence both of very fine aggregates (here identified as silts) and of coarser elements (sand).

The attempt was hence made to obtain, following the teachings of the patent cited, a certain number of specimens so as to be able to compare the materials, which - as will emerge clearly - differ both as regards the binders used and as regards the physical and mechanical properties.

The material was obtained according to the patent mentioned, using firing temperatures ranging from 1000 to 1100°C with stay times of 4 h in the presence of binding additives constituted by aluminium phosphate and sodium carbonate.

Said material always presents an "orange-peel" surface such as to render it particularly unpleasant from the aesthetic standpoint.

The best results correspond to the material sintered at 1100°C for 4 h, which presents a bulk density of 2.0 g/cm³, an apparent density of approximately 2.2 g/cm³, an absorption of water estimated in the region of 13%, a porosity of approximately 15%, and a biaxial flexural strength [D. K. Shetty et al., "Biaxial Flexure Tests for Ceramics", Ceramic Bulletin, 59 [12], 1193-1197 (1980)] of 11 MPa.

It may be readily noted that all the materials described according to the present invention have a physical and mechanical performance, in addition to aesthetic characteristics, that are better than those of the materials described in the patent No. GB-A-18 883.

## Claims

1. A process for obtaining artificial stone starting from porphyry silts and/or sands, comprising:
a) forming a mixture constituted by said porphyry silts and/or sands;
b) adding to said mixture at least one consolidation additive;
c) producing, starting from said mixture, a shaped body (greenware); and
d) sintering said shaped body, so as to obtain said artificial stone,
the process being **characterized in that**:
- said porphyry silts and/or sands have a grain size of less than 4 mm; and
- said consolidation additive is chosen between sodium silicate and cobalt chloride.

2. The process according to Claim 1, wherein said porphyry silts and/or sands have a grain size of less than 3 mm.

3. The process according to any one of Claim 1 or Claim 2, wherein said silts have a grain size of less than 300 µm.

4. The process according to any one of the preceding claims, wherein said consolidation additive is added in an amount comprised between 0.1 and 10 wt% with respect to the weight of said mixture of silts and/or sands.

5. The process according to any one of the preceding claims, wherein said sintering is conducted at a temperature comprised between 1000-1200°C.

6. The process according to any one of the preceding claims, wherein said addition of said at least one consolidation additive is made in the presence of water.

7. The process according to Claim 6, wherein the water is present in an amount of between 0.1 and 20 wt% with respect to the weight of said mixture of said silts and/or sands, preferably between 2 and 20 wt%.

8. The process according to any one of the preceding claims, wherein said shaped body is obtained by pressing of said mixture with a load of between 10 and 100 MPa.

9. An artificial stone obtained by applying the process according to any one of Claims 1 to 8.
